# EUROPEAN PATENT APPLICATION

(11) **EP 0 567 684 A1**
(43) Date of publication of application: **03.11.1993**
(21) Application number: 92109935.4
(22) Date of filing: 12.06.1992
(51) Int. Cl.: G02F 1/136

(54) **Electro-optical apparatus**

(30) Priority: 27.03.1992 JP 102054/92
(71) Applicant: SEIKO EPSON CORPORATION, Shinjuku-ku Tokyo-to (JP)
(72) Inventor: Takahashi, Kotoyoshi, Seiko Epson Corporation, Suwa-shi, Nagano-ken (JP); Ushiki, Takeyoshi, Seiko Epson Corporation, Suwa-shi, Nagano-ken (JP)
(74) Representative: Hoffmann, Eckart, Dipl.-Ing.

(57) **Abstract**

In an electro-optical apparatus using non-linear devices (S1, S2) for driving pixel electrodes (5), a pixel electrode is driven by at least pair of such non-linear devices that are connected electrically in series. Such series connection reduces the effect of so-called dummy non-linear devices inevitably associated with each non-linear device, especially of a so-called lateral MIM structure. By the series connection the total capacitance component of the dummy non-linear devices is decreased and the total resistance component increased.

## Description

The invention concerns an electro-optical apparatus including at least one pixel electrode and a non-linear device (driving device) for driving that pixel electrode.

A liquid crystal display panel which is one example of such an electro-optical apparatus is disclosed in EP-A-0381927. In this prior art a plurality of pixel electrodes are arranged in a matrix pattern on the inner side of one of a pair of opposing substrates sandwiching a liquid crystal layer therebetween. Each pixel electrode is driven through a non-linear device, i. e. a device having a non-linear current-voltage-characteristic.

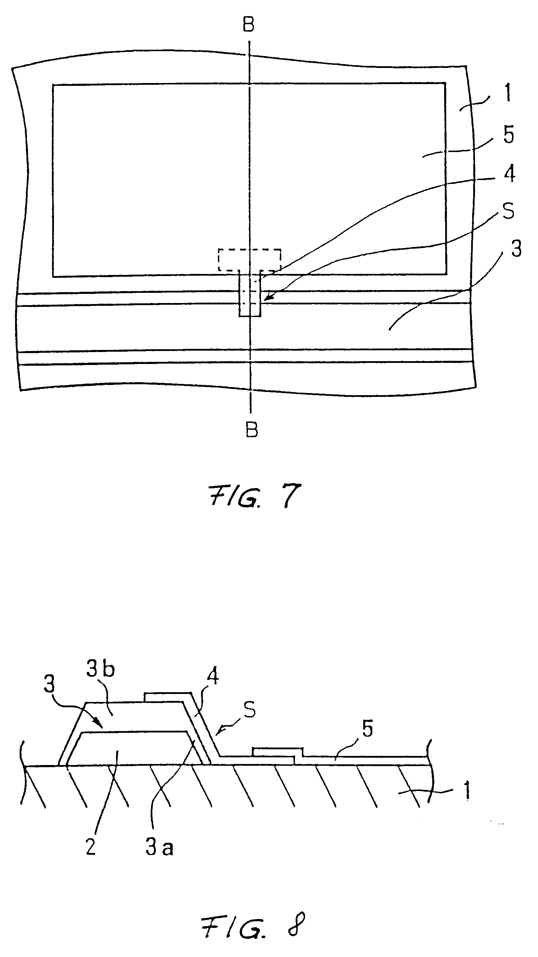

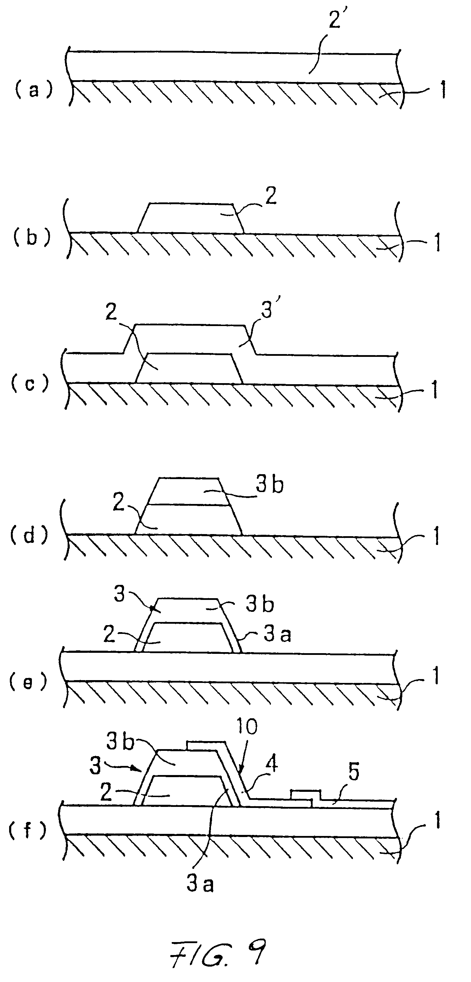

Another electro-optical device of this kind is disclosed in European patent application 92100994.0 (prior art according to art. 54 (3) EPC). Figs. 7 and 8 illustrate this prior art. Fig. 7 is a plan view on a part of that of the two opposing substrates that carries the pixel electrodes and the non-linear devices (this substrate will be called device substrate below). Fig. 8 is a sectional view along line B-B in Fig. 7.

The device substrate 1 is made from clear glass or a similar material. A conductor 2 made of tantalum (Ta), an insulator 3 made of tantalum oxide (TaOx) and a conductor 4 made of chrome (Cr) are formed in this order one upon the other on device substrate 1. A pixel electrode 5 is connected to conductor 4.

Conductors 2 and 4 and the insulator therebetween form an MIM (metal-insulator-metal) device S which is a non-linear device used for driving the pixel electrode. In a liquid crystal panel a plurality of pixel electrodes are arranged on the surface of device substrate 1 in a matrix configuration. Conductor 2 is connected via such MIM devices to respective pixel electrodes for signal input.

As shown in Fig. 8, in the MIM devices of the illustrated example, insulator 3 comprises an insulating layer 3b on the top surface of conductor 2 and an insulating layer 3a on the side surfaces of conductor 2. Insulating layer 3b is thicker than insulating layer 3a and has a high electrical resistance to serve as a barrier layer. Therefore, only the side portion where conductors 2 and 4 and insulating layer 3a overlap is used as the non-linear device in the form of a so-called lateral MIM structure.

By using only insulating layer 3a at the side of conductor 2 for a non-linear device, the surface area of the non-linear device can be made very small. This is very effective for creating a high density and a high degree of fineness in an electro-optical apparatus such as a liquid crystal display device.

An example of a process for manufacturing the device substrate described above will be explained below with reference to Fig. 9.
(1) In a first step a conductive film 2' of a material such as tantalum is formed on a transparent substrate 1 such as a glass substrate as shown in Fig. 9(a).
(2) By means of a photo-etching technique conductive film 2' is patterned, as shown in Fig. 9(b), to obtain the first conductor 2.
(3) An insulating layer 3' such as a tantalum oxide layer is applied to the surface of substrate 1 having the first conductor 2 formed on it (Fig. 9(c)).
(4) Insulating layer 3' is removed except for the portion on the top surface of first conductor 2 by means of a photo-etching technique, thus forming barrier layer 3b. This etching may be performed, for example, in the following way, provided in the condition shown in Fig. 9(c) the first conductor 2 is opaque and insulating layer 3' is transparent. The surface of insulating layer 3' is coated with a positive photosensitive resist (a photoresist whose exposed areas can be removed by etching). When exposure is done from the back surface through transparent substrate 1, only the photo-resist on the first conductor 2 will remain after developing. After that, the barrier layer 3b is formed as indicated in Fig. 9(d) by etching the insulating layer 3',
(5) Then, insulating layer 3a is applied to the side surfaces of the first conductor 2 as shown in Fig. 9(e).
(6) After that the second conductor 4 and the pixel electrode 5 are applied as shown in Fig. 9(f) and are etched into a desired pattern by means of a photo-etching technique.

With the above structure, in addition to the lateral MIM device a dummy MIM is formed by the first conductor 2, the barrier layer 3b and the second conductor 2. This dummy MIM device adversely affects many of the desired characteristics of the lateral MIM device. To reduce this influence it is necessary to make the resistance component of the dummy MIM device extremely large and its capacitance component extremely small. To that end the thickness of the barrier layer 3b should be as large as possible. However, if the barrier layer 3b is made too thick the height of the structure gets to large and makes processing difficult. For example, with an increase of the height, the portion at a higher level which has an increase in the time for film formation or etching will experience problems. Further, problems such as an increase in defects, for instance by broken lines, difficult photo-alignment, difficult focusing and an increase of deviations of pattern sizes during photo-etching occur. In the prior art, in general an oxide film with a film thickness of 300 nm has been used as the barrier layer 3b. However, for the reasons given above, it is impractical to increase that film thickness to twice that amount or 600 nm for example. Actually, it is almost impossible.

This invention is intended to remedy the drawbacks of the prior art explained above and to provide an electro-optical device using non-linear devices that have dummy device portions which do not impair the characteristics of the apparatus even if the barrier layer is not very thick.

This object is achieved with an electro-optical apparatus as claimed.

According to this invention, a pixel electrode is driven by at least one pair consisting of a first non-linear device and a second non-linear device. In this case, a first dummy device is formed by the barrier layer of the first non-linear device and the first and second conductors contacting it. In the same manner a second dummy device is formed for the second non-linear device. However, because the signal paths through these two dummy devices are connected in series, the signal will pass through a barrier layer two times. If the thicknesses of both barrier layers are equal, the effect of the series connection is the same as doubling the film thickness. Thus, the invention allows to increase the resistance of the (combined) dummy device two-fold and reduce its capacitance to about half that of a dummy device in the prior art.

Embodiments of the invention will be described below with reference to the drawings in which:
- Fig. 1: is a plan view on a part of a device substrate illustrating one embodiment of the electro-optical apparatus according to the invention,
- Fig. 2: is an enlarged cross sectional view along line A-A in Fig. 1,
- Figs. 3(a) and 3(b): are equivalent circuits of the non-linear devices according to the invention and the prior art, respectively,
- Fig. 4: is a view similar to Figure 1, showing another embodiment of the invention,
- Fig. 5: is a view similar to Figs. 1 and 4 showing still another embodiment of the invention,
- Fig. 6: is a graph showing the contrast versus capacitance ratio for the above embodiment,
- Fig. 7: is a plan view of a part of the device substrate according to the prior art,
- Fig. 8: is an enlarged sectional view along line B-B in Fig. 7,
- Figs. 9(a) through 9(f): are sectional views illustrating various process steps of manufacturing the device substrate according to the prior art.

In the embodiments described below the invention is applied to a liquid crystal display device as one example of an electro-optical apparatus.

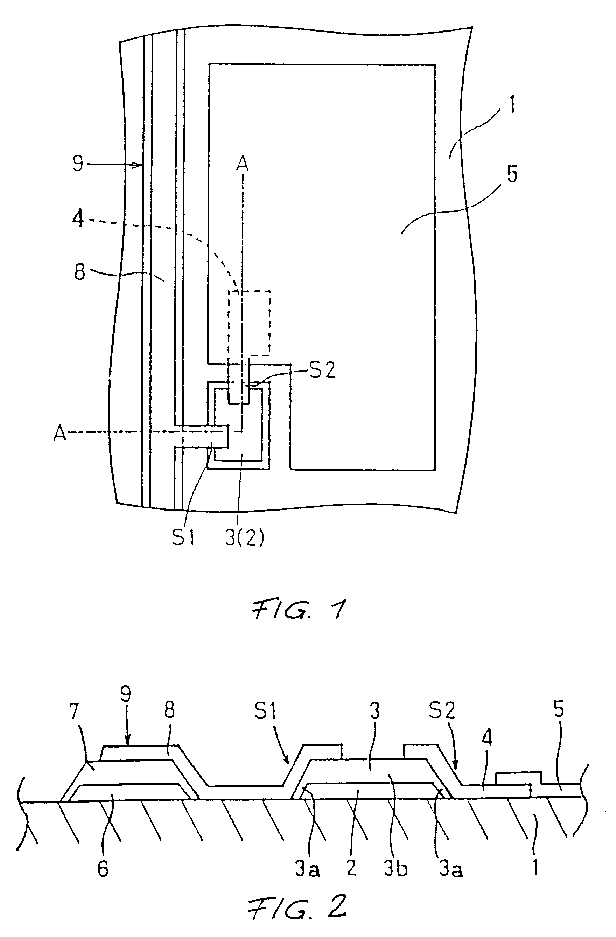

Figs. 1 and 2 illustrate a first embodiment of the invention. This embodiment comprises an inter-device interconnect 9, which is formed by staking a conductor 6 made of a material such as tantalum, an insulator 7, made of a material such as tantalum oxide, and a conductor 8 made of a material such as chrome, on the surface of a device substrate 1 made of a material such as transparent glass. The embodiment further comprises a conductor 2 made of tantalum on the surface of substrate base 1 between the inter-device interconnect 9 and a pixel electrode 5 which is made of ITO (indium tin oxide). Conductor 2 has the shape of an equilateral trapezoid in cross-section and is covered by an insulator 3 comprising an insulating layer 3b forming a barrier layer on the top surface of conductor 2 and insulating layers 3a on the side surfaces of conductor 2. A part of the conductor 8 of the inter-device interconnect 9 extends to the surface of insulating layers 3a and 3b. The part where conductor 8, insulating layer 3a and conductor 2 overlap each other forms a non-linear device S1 in the form of a lateral MIM device. A conductor 4, which is connected to the pixel electrode 5 extends to the surface of insulating layers 3a and 3b. The part where conductor 2, insulating layer 3a and conductor 4 overlap each other forms a second non-linear device S2 in the form of a lateral MIM device.

The first non-linear device uses conductor 8 as the first and conductor 2 as the second conductor, whereas the second non-linear device S2 uses conductor 2 as the first and conductor 4 as the second conductor. Thus, the two non-linear devices S1 and S2 are electrically connected in series between the inter-device interconnect 9 and the pixel electrode 5. That is, the signal path extends from conductor 8 through insulator 3 to conductor 2 and from conductor 2 again through insulator 3 to conductor 4.

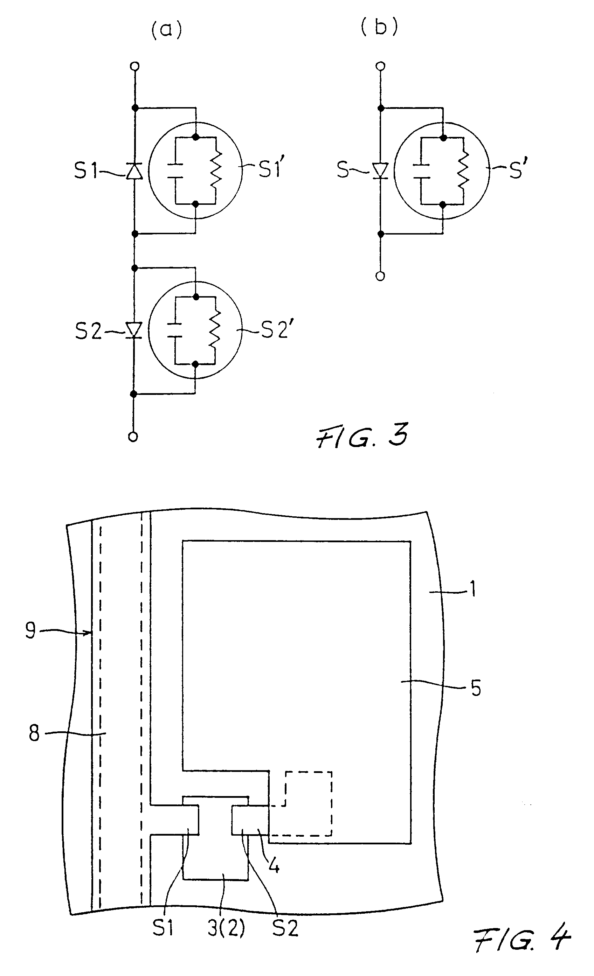

Each of the non-linear devices S1 and S2 is associated with a respective dummy non-linear device. A first dummy non-linear device is formed in the vicinity of the first non-linear device S1 where conductors 2 and 8 overlap with insulating layer or barrier layer 3b therebetween. In the same manner a second dummy non-linear device is formed in the vicinity of the second non-linear device S2 where conductors 2 and 4 overlap with insulating layer 3b therebetween. Each dummy non-linear device is electrically in parallel to its associated non-linear device S1 and S2, respectively. Therefore, since the non-linear devices S1 and S2 are connected in series between the inter-device interconnect 9 and the pixel electrode 5, so are the dummy non-linear devices, as shown in the equivalent circuit of Fig. 3(a) where the dummy non-linear devices are denoted S1' and S2'. Fig 3(b) shows the equivalent circuit of a single non-linear device S in parallel to a dummy non-linear device S' according to the prior art.

As will be appreciated from a comparison of Figs. 3(a) and 3(b), the paired arrangement according to the invention has a smaller overall capacitance and a larger overall resistance of the combined dummy non-linear devices S1' and S2' compared to those of the prior art of Fig. 3(b). With the same thickness of the barrier layer 3b in both cases, the capacitance according to the invention is half and the resistance twice that of the prior art. By reducing the capacitance and increasing the resistance of the dummy non-linear device portion formed across the barrier layer 3b, the present invention allows to reduce the drive voltage of the liquid crystal display device or another electro-optical apparatus. In addition there are the advantages of reducing cross-talk and improving the contrast.

Further, by driving the pixel electrodes through a pair of non-linear devices S1 and S2 connected in series, as described above, it is possible to eliminate the so-called asymmetrical polarity of the non-linear devices, i.e. a dependency of the characteristic on the polarity. In particular, when the effective surface area of the non-linear devices S1 and S2 is the same, it is possible to completely eliminate the asymmetrical polarity.

In the embodiment described above, the inter-device interconnect 9 is formed by means of conductor 6, insulator 7 and conductor 8 in order to improve adhesion of conductor 8 to the substrate. However, it may also be formed of a single layer conductor.

The above mentioned materials are those of a preferred embodiment. However, there are many materials that may be used for an MIM device. For example, Ta, Cr, Ti, Au, Pt, Al, Mg, etc. can be used as a conductor for the MIM device. TaOx, SiOx, TaNx, SiNx, AlOx, etc. can be used as an insulator. Further, pixel electrode 5 and at least the adjacent conductor 4 can be made of the same conductive material for example ITO or thin films of a variety of heavy metals.

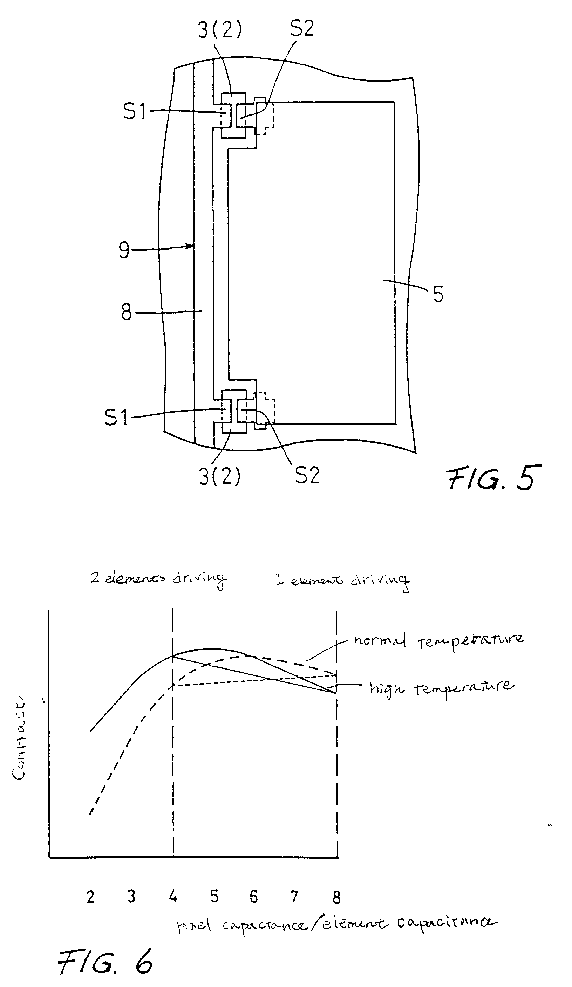

In the above embodiment the pair of non-linear devices S1 and S2 is arranged nearly perpendicularly to each other and to the rectangular area of insulator 3. However, this arrangement is optional. For example, it is possible to arrange the two non-linear devices on a straight line on opposing sides of insulator 3 as shown in Fig. 4.

In the embodiments according to Figs. 1 to 4 a single pair of series connected non-linear devices is used to connect pixel electrode 5 to inter-device interconnect 9. However, a plurality of such pairs may be used instead for each pixel electrode 5, the pairs either connected in series or in parallel to each other.

Fig. 5 shows an embodiment in which two pairs of series connected non-linear devices S1 and S2 are arranged electrically in parallel between inter-device interconnect 9 and pixel electrode 5.

An arrangement according to Fig. 5 has the following further advantage: Reference is made to Fig. 6 showing the contrast versus the capacitance ratio, that is the ratio between the pixel capacitance and the capacitance of the non-linear devices driving the pixel electrode. Let this capacitance ratio be 4 for the arrangement of Fig. 5 having two pairs S1, S2 electrically in parallel. If one of the non-linear devices turns out to be defective and is cut out, for instance by means of laser repair, one pair of non-linear devices will be left for driving the pixel electrode, and the capacitance ratio will increase to 8. However, as to be taken from Fig. 6, the contrasts for a capacitance ratio of 8 and 4 are about the same, both at normal (room) temperature and high temperatures. Therefore, if one of the two pairs of non-linear devices of a pixel electrode is defective, this pixel will still exhibit about the same contrast as a pixel driven by two pairs.

Even if two non-linear devices such as MIM devices according to the prior art would be used to drive one pixel in parallel, if one of the two devices were defective, the capacitance ratio would change to an extent, that a big difference in the contrast would occur. Thus, although it would be possible to have a certain degree of repair by optimizing the driving method, this would be possible for a two-value display (expressing only on and off) only but not for a grey scale display. Because grey scale display was not possible with the prior art, it could not be used for the display of television images.

In contrast to this, if an optimal capacitance ratio is selected as described above, according to the invention it will be possible to obtain in a wide temperature range a uniform contrast sufficient even for a grey scale display independent of whether a pixel is driven by one pair or two pairs of non-linear devices. Because of the redundancy involved in providing two pairs of non-linear devices, the yield of such electro-optical apparatus can be raised markedly.

The foregoing embodiments of the present invention were related to a liquid crystal display device. However, as mentioned before, the invention is not limited to liquid crystal display devices, but can be applied to a variety of other liquid crystal devices and other electro-optical apparatus.

## Claims

1. Electro-optical apparatus including at least one pixel electrode (5) and a driving device (S1, S2) having a non-linear current-voltage characteristic for driving said pixel electrode (5), said driving device comprising on a substrate (1) a first conductor (2), an insulator (3) and a second conductor (8, 4) arranged in this order one upon the other, characterized in that at least one pair comprising two such driving devices connected electrically in series, is connected between said pixel electrode (5) and a drive line (9)

2. The electro-optical apparatus according to claim 1, wherein a plurality of pairs of series connected driving devices are connected in parallel to each other between said pixel electrode (5) and said drive line (9).

3. The electro-optical apparatus according to claim 1 or 2 wherein the two driving devices of each pair have one (2) of said first and second conductors (2, 8, 4) and said insulator (3) in common.
